# EUROPÄISCHE PATENTSCHRIFT

(11) **EP 3 390 826 B1**
(45) Veröffentlichungstag und Bekanntmachung des Hinweises auf die Patenterteilung: **06.05.2020**
(21) Anmeldenummer: 16820355.2
(22) Anmeldetag: 15.12.2016
(51) Int. Cl.: F04B 53/02, F04B 53/14, F04B 53/16, F04B 1/04, F16J 15/16

(54) **FLUIDPUMPE MIT KOLBEN UND DIESEN LAGERNDEN STÜTZKÖRPER FÜR DICHTUNG**
FLUID PUMP WITH A PISTON AND A PISTON SUPPORTING ELEMENT FOR SEALING
POMPE FLUIDIQUE AVEC UN PISTON ET UN ÉLÉMENT DE SUPPORT DE PISTON POUR ÉTANCHÉIFICATION

(30) Priorität: 16.12.2015 DE 102015121968
(43) Veröffentlichungstag der Anmeldung: 24.10.2018
(73) Patentinhaber: Agilent Technologies, Inc., Santa Clara, California 95051 (US)
(72) Erfinder: DEHMER, Bernhard, 76437 Rastatt (DE); LICHTENBERGER, Andre, 76337 Waldbronn (DE)
(74) Vertreter: Dilg, Haeusler, Schindelmann Patentanwaltsgesellschaft mbH
(86) Internationale Anmeldenummer: PCT/IB2016/057665
(87) Internationale Veröffentlichungsnummer: WO 2017/103845

(56) Entgegenhaltungen:
- EP-A1- 1 881 199
- DE-A1- 19 904 926
- US-A- 3 905 608
- US-A- 5 653 876
- US-A1- 2013 323 103

## Beschreibung

### TECHNISCHER HINTERGRUND

Die vorliegende Erfindung betrifft eine Fluidpumpe, sowie ein Probentrenngerät und ein Herstellungsverfahren.

In einer HPLC wird typischerweise eine Flüssigkeit (mobile Phase) bei einer sehr genau kontrollierten Flussrate (zum Beispiel im Bereich von Mikrolitern bis Millilitern pro Minute) und bei einem hohen Druck (typischerweise 20 bis 1000 bar und darüber hinausgehend, derzeit bis zu 2000 bar), bei dem die Kompressibilität der Flüssigkeit spürbar sein kann, durch eine sogenannte stationäre Phase (zum Beispiel in einer chromatografischen Säule), bewegt, um einzelne Komponenten einer in die mobile Phase eingebrachten Probenflüssigkeit voneinander zu trennen. Ein solches HPLC-System ist bekannt zum Beispiel aus der EP 0,309,596 B1 derselben Anmelderin, Agilent Technologies, Inc.

Die Pumpe, welche die mobile Phase mit dem hohen Druck fördert, kann in einer Pumpenkörpereinrichtung einen dort reziprozierenden Kolben aufweisen, der die Verdrängung des Fluids vornimmt. Zwischen dem Kolben und der Pumpenkörpereinrichtung befindet sich ein Spalt, der mittels einer Dichtung gedichtet wird. Es hat sich herausgestellt, dass bei hohen Drücken die Dichtung und der Kolben einer hohen Beanspruchung ausgesetzt sind und schnell verschleißen.

WO 2012/122977 A1 offenbart eine Kolben-Zylinder-Einheit für eine Kolbenpumpe für die Hochleistungsflüssigkeitschromatographie. In einem Zylindergehäuse ist eine Ausnehmung vorgesehen, in der ein Kolben verschiebbar geführt ist. In einem rückwärtigen Bereich erweitert sich die Ausnehmung, wobei in diesem Bereich ein ringförmiges Dichtelement vorgesehen ist, das vom Kolben durchragt wird. Um bei hohen Drücken zu vermeiden, dass sich das Dichtelement verformt und dadurch seine Dichtwirkung verliert, ist an der rückwärtigen Seite des Dichtelements ein ringförmiges Stützelement angeordnet, das vom Kolben durchgriffen wird. Das Stützelement ist mit ausreichend geringen Toleranzen hergestellt, so dass sich sowohl gegenüber dem dieses durchgreifenden Kolben als auch gegenüber der Innenwandung des sich erweiternden Teils der Ausnehmung praktisch kein oder allenfalls ein sehr geringer ringförmiger Spalt ergibt. Dabei muss sichergestellt sein, dass zwischen der Innenwandung des Stützelements und dem Außenumfang des Kolbens keine oder allenfalls eine geringe Reibung entsteht. WO 2012/122977 A1 betont, dass die vorgenannten Ringspalte so groß sind, dass auch bei hohen Drücken keinerlei Gefahr besteht, dass das Dichtelement in Folge eines Hineindrückens in den Ringspalt zerstört wird oder die Dichtwirkung des Dichtelements verloren geht. Das Stützelement soll Druckkräfte oder Spannungen aufnehmen und diesen standhalten, die von einem Druck im Zylindervolumen über das Dichtelement - mithin in axialer Richtung - ausgeübt werden. US 2013/0323103 A1 bezieht sich auf Fluidpumpen (insbesondere für HPLC) mit einem Kolben, welcher mittels eines Rings seitlich abgedichtet ist. Zwischen Ring und Gehäuse, mit direktem Kontakt zu dem Kolben, ist ein back-up Ring angeordnet, welcher eine Opferlage darstellt, die von Zeit zu Zeit von dem Kolben abgetragen wird. Dies insbesondere deswegen, weil der back-up Ring aus einem weichen Material (PEEK, Polyetherketon) hergestellt ist.

### OFFENBARUNG

Es ist eine Aufgabe der Erfindung, eine verschleißarme Fluidpumpe zu ermöglichen. Die Aufgabe wird mittels der unabhängigen Ansprüche gelöst. Weitere Ausführungsbeispiele sind in den abhängigen Ansprüchen gezeigt.

Gemäß einem exemplarischen Ausführungsbeispiel der vorliegenden Erfindung ist eine Fluidpumpe zum Pumpen von Fluid (d.h. eine Flüssigkeit und/oder ein Gas, optional aufweisend Festkörperpartikel) in einem Probentrenngerät (insbesondere in einem Flüssigkeitschromatographiegerät) geschaffen, wobei die Fluidpumpe eine Pumpenkörpereinrichtung (die auch als Pumpenkörper oder Kolbenkammer oder Pumpengehäuse bezeichnet werden kann und aus einer oder mehreren Pumpenkörperkomponenten gebildet sein kann; die Pumpenkörpereinrichtung kann zumindest zum Teil einen Fluidförderraum begrenzen, in welcher ein Kolben das Fluid verdrängen und fördern kann), einen Kolben, der zum Fördern von Fluid reziprozierfähig (das heißt eingerichtet, sich in der Pumpenkörpereinrichtung hin und her zu bewegen) in der Pumpenkörpereinrichtung angeordnet ist, eine Dichtung, die in Kontakt mit und (insbesondere unter Hochdruckbedingungen) fluiddichtend zwischen der Pumpenkörpereinrichtung und dem Kolben angeordnet ist, und einen Stützkörper aufweist, der mit der Dichtung diese stützend gekoppelt ist. Insbesondere können der Stützkörper und der Kolben so angeordnet sein, dass diese im Betrieb der Fluidpumpe (d.h. während des Förderns von Fluid) zumindest zeitweise, insbesondere permanent, miteinander in Berührkontakt stehen. Zumindest ein erster Oberflächenbereich des Stützkörpers, der im Betrieb der Fluidpumpe zumindest zeitweise mit dem Kolben in Berührkontakt steht, weist eine Beschichtung aus Diamant (insbesondere aus polykristallinem Diamant, weiter insbesondere aus geglättetem polykristallinem Diamant) auf.

Gemäß einem anderen exemplarischen Ausführungsbeispiel ist ein Probentrenngerät zum Trennen einer in einer mobilen Phase befindlichen fluidischen Probe in Fraktionen geschaffen, wobei das Probentrenngerät eine Fluidpumpe mit den oben beschriebenen Merkmalen aufweist, die zum Antreiben von zumindest einer der mobilen Phase und der fluidischen Probe (als das mittels der Fluidpumpe gepumpte Fluid) durch das Probentrenngerät konfiguriert ist, und eine Trenneinrichtung stromabwärts der Fluidpumpe zum Trennen der unterschiedlichen Fraktionen der in der mobilen Phase befindlichen Probe aufweist.

Gemäß noch einem anderen exemplarischen Ausführungsbeispiel ist ein Verfahren zum Herstellen einer Fluidpumpe zum Pumpen von Fluid in einem Probentrenngerät geschaffen, wobei bei dem Verfahren ein Kolben zum Fördern von Fluid in einer Pumpenkörpereinrichtung reziprozierfähig angeordnet wird, eine Dichtung in Kontakt mit und fluiddichtend zwischen der Pumpenkörpereinrichtung und dem Kolben angeordnet wird, ein Stützkörper bereitgestellt wird, der mit der Dichtung diese stützend gekoppelt wird. Optional können der Stützkörper und der Kolben derart angeordnet werden, dass diese im Betrieb der Fluidpumpe zumindest zeitweise, insbesondere permanent, miteinander in Berührkontakt stehen. Zumindest ein erster Oberflächenbereich des Stützkörpers, der im Betrieb der Fluidpumpe zumindest zeitweise mit dem Kolben in Berührkontakt steht, weist eine Beschichtung aus Diamant (insbesondere aus polykristallinem Diamant, weiter insbesondere aus geglättetem polykristallinem Diamant) auf.

Gemäß einem exemplarischen Ausführungsbeispiel ist eine Fluidpumpe geschaffen, bei der eine zumindest zeitweise bzw. zumindest abschnittsweise (d.h. in räumlicher Hinsicht) Berührung zwischen dem reziprozierenden Kolbenkörper und dem Stützkörper bewusst ausgebildet wird, sodass ein dazwischen angeordneter Spalt sehr klein bzw. zumindest abschnittsweise verschwindend ausgebildet sein kann. Dies ermöglicht es wiederum, dass eine unter Hochdruckbedingungen in den Spalt hineingezogene bzw. extrudierte flexible oder elastische Masse der Dichtung deutlich reduziert werden kann. Dadurch ist eine unerwünschte Überhitzung des dem Druck ausweichenden Dichthäutchens der Dichtung in dem Spalt unterdrückt, sodass es zu keinem nennenswerten problematischen Aufschmelzen derselben und zu keiner Verbindung der Kolbenoberfläche mit Material der Dichtung kommen kann. Die Lebenszeit der Pumpe und insbesondere der Dichtung und des Kolbens kann dadurch deutlich erhöht werden.

Im Weiteren werden zusätzliche Ausgestaltungen der Pumpe, des Probentrenngeräts und des Verfahrens beschrieben.

Es ist möglich, dass die Pumpenkörpereinrichtung, der Stützkörper und die Dichtung als voneinander separate Bauteile vorgesehen werden, die zum Beispiel lediglich durch eine Klemmkraft zusammengehalten werden, die durch das Verbinden (zum Beispiel Verschrauben) von einzelnen Pumpenkörperkomponenten erzeugt wird. Alternativ ist es aber auch möglich, dass zum Beispiel die Pumpenkörpereinrichtung mit dem Stützkörper einstückig ausgebildet oder fest verbunden (zum Beispiel formschlüssig) wird und/oder die Dichtung mit dem Stützkörper einstückig ausgebildet oder fest verbunden (zum Beispiel über Adhäsionskräfte) wird.

Gemäß einem Ausführungsbeispiel kann der Stützkörper an der Pumpenkörpereinrichtung ein, insbesondere ortsfestes, Lager für den Kolben bildend, angeordnet sein. Anders ausgedrückt kann der Stützkörper an der Pumpenkörpereinrichtung als ein für den Kolben bildendes, insbesondere ortsfestes, Lager angeordnet sein. Noch anders formuliert bildet der Stützkörper für den Kolben ein Lager und ist entsprechend an der Pumpenkörpereinrichtung angeordnet. Indem das Festlager gemäß dem beschriebenen Ausführungsbeispiel durch den Stützkörper und nicht durch die Dichtung gebildet wird, kann ein Spalt zwischen Stützkörper und Kolben definiert und sehr schmal ausgebildet werden. Dies hat wiederum auf die Lebensdauer der Dichtung positive Auswirkungen.

Unter einem "Lager für den Kolben" kann im Rahmen der vorliegenden Anmeldung insbesondere eine mechanische Ausgestaltung des Stützkörpers verstanden werden, welche die Bewegungsfreiheit des Kolbens in vorgebbarer und definierter Weise einschränkt. Somit kommt einem als Lager ausgebildeten Stützkörper eine räumliche Führungsfunktion für den Kolben zu. Ein solches Lager hat die technische Aufgabe, den Kolben positionsgesteuert zu führen und in mindestens einer bestimmten Ebene wirksame äußere Kräfte aufzunehmen und auf die Pumpenkörpereinrichtung bzw. das Pumpengehäuse zu übertragen. Insbesondere kann der Stützkörper auch als Lager für den Kolben bezeichnet werden, welches die Dichtung stützt.

Gemäß einem Ausführungsbeispiel kann das Lager ein radiales Lager sein, insbesondere ein auf die Kolbenbewegung bezogen radiales Lager. Unter einem radialen Lager wird in diesem Zusammenhang insbesondere verstanden, dass der Stützkörper den Kolben bei seiner axialen Reziprozierbewegung derart führt bzw. in seinen nichtaxialen oder radialen Bewegungsfreiheitsgraden einschränkt, so dass eine Kolbenauslenkung in radialer Richtung (d.h. ein Versatz des Kolbens parallel zu seiner axialen Orientierung bzw. zu einer Reziprozier-Sollrichtung) unterdrückt oder sogar verunmöglicht wird. Ein Verkippen des Kolbens, d.h. eine Winkelabweichung zur Reziprozier-Sollrichtung, kann in der radialen Lagerebene stark eingeschränkt oder auch ganz unterbunden werden. Anders ausgedrückt kann ein radiales Lager, das durch den Stützkörper gebildet wird, zur Aufnahme radialer Querkräfte ausgebildet sein, die auf den Kolben einwirken können. Wenn der Kolben zum Beispiel als im Wesentlichen kreiszylindrischer Körper ausgebildet ist, korrespondiert die axiale Richtung zu der zylindrischen Kolbenachse und die radialen Richtungen zu den hierzu senkrechten Erstreckungsrichtungen im kreisförmigen Querschnitt. Somit kann bei einem radialen Lager der Stützkörper radiale Kräfte, die auf den Kolben einwirken, aufnehmen und an die Pumpenkörpereinrichtung ableiten, und so eine axial ortsfeste, radial begrenzte Durchdringungsebene des Kolbens in der Pumpenkörpereinrichtung vorgeben. Insbesondere kann der Stützkörper (insbesondere Stützring) als radiales Lager konfiguriert sein, welcher einen Spalt zwischen dem Stützkörper und einer Kolbenoberfläche so eng wie möglich hält und es der Kolbenoberfläche erlaubt, in permanenten oder zumindest zeitweisen physischen Kontakt mit der gegenüberliegenden Oberfläche des Stützkörpers gemäß existierenden radialen Lagerkräften zu gelangen.

Gemäß einem Ausführungsbeispiel kann die Dichtung ausgebildet sein, im Betrieb der Fluidpumpe zumindest zeitweise und zumindest teilweise in einen verbleibenden Spalt zwischen dem Stützkörper und dem Kolben angeordnet zu sein. Bei Hochdruck in der Pumpenkörpereinrichtung hat die Dichtung die Tendenz, dem Druck auszuweichen und dadurch in einen abschnittsweisen Restspalt zwischen Kolben und Stützkörper hineingezogen zu werden, der mit der Niederdruckseite druckverbunden sein kann. Zwar kann gemäß dem beschriebenen Ausführungsbeispiel eine gewisse Menge des Materials der Dichtung unter Hochdruckbedingungen in den Spalt hineingezogen werden, der aber aufgrund der beschriebenen Ausgestaltung besonders klein ausgebildet werden kann. Damit ist auch die Menge von Material der Dichtung, die in den Spalt hineingezogen wird, klein. Probleme mit aufgeschmolzenem und den Kolben verunreinigenden Material der Dichtung können somit unterdrückt oder eliminiert werden.

Gemäß einem Ausführungsbeispiel kann ein erster Oberflächenbereich des Kolbens, der im Betrieb der Fluidpumpe zumindest zeitweise mit dem Stützkörper in Berührkontakt steht, gehärtet sein, insbesondere eine Härtungsbeschichtung aufweisen. In entsprechender Weise kann alternativ oder ergänzend ein erster Oberflächenbereich des Stützkörpers, der im Betrieb der Fluidpumpe zumindest zeitweise mit dem Kolben in Berührkontakt stehen, gehärtet sein, insbesondere eine Härtungsbeschichtung aufweisen. Wenn der Kolben und der Stützkörper zumindest zeit- und/oder abschnittsweise, insbesondere permanent in Kontakt stehen, sind Maßnahmen zum Unterdrücken einer Kratzerbildung an dem Kolben besonders vorteilhaft. Eine Härtung der miteinander in Kontakt stehenden Oberflächen von Stützkörper und Kolben vermeidet ein Verkratzen des Kolbens und erhöht die Lebensdauer der Pumpe. Mittels einer Beschichtung zum Härten der Oberflächen ist eine präzise definierte Einstellung des Härtegrads möglich.

Gemäß einem Ausführungsbeispiel können der gehärtete erste Oberflächenabschnitt des Stützkörpers und der gehärtete erste Oberflächenabschnitt des Kolbens dieselbe Härte aufweisen, insbesondere aus demselben Material gebildet sein. Dies hat den Vorteil, dass bei einem Aneinanderreiben der gehärteten Oberflächen von Stützkörper und Kolben keine der beiden Oberflächen durch die andere, jeweils gleich harte Oberfläche verkratzt oder beschädigt wird.

Gemäß einem Ausführungsbeispiel kann ein zweiter Oberflächenbereich des Kolbens, der im Betrieb der Fluidpumpe zumindest zeitweise mit der Dichtung in Berührkontakt steht, thermisch hochleitfähig sein, insbesondere eine thermische Leitfähigkeit von mindestens 200 W/mK haben, weiter insbesondere von mindestens 1000 W/mK haben. In entsprechender Weise kann alternativ oder ergänzend ein zweiter Oberflächenbereich des Stützkörpers, der im Betrieb der Fluidpumpe zumindest zeitweise mit der Dichtung in Berührkontakt steht, thermisch hochleitfähig sein, insbesondere eine thermische Leitfähigkeit von mindestens 200 W/mK haben, weiter insbesondere von mindestens 1000 W/mK haben. Die genannten zweiten Oberflächenbereiche von Kolben und Stützkörper können insbesondere diejenigen sein, zwischen denen ein kleiner Spalt zwischen Stützkörper und Kolben gebildet ist, in den unter Hochdruckbedingungen Material der Dichtung hineingezogen wird. Wenn nun die einander gegenüberliegenden zweiten Oberflächenbereiche (oder auch nur einer dieser zweiten Oberflächenbereiche) mit einer thermisch hochleitfähigen Eigenschaft ausgestattet ist (insbesondere durch eine entsprechende Oberflächenbeschichtung), dann kann Wärme von in den Spalt extrudiertem und erhitztem Dichtmaterial hochwirksam abgeführt werden und das Dichtmaterial vor einem unerwünschten Aufschmelzen geschützt werden. Ein solches Aufschmelzen wird auch als Ursache des herkömmlich beobachteten unerwünschten Ablagerns von Spots des Dichtmaterials auf dem Kolben angesehen. Dadurch wird der Verschleiß der Dichtung (durch Materialverlust) und des Kolbens (durch Oberflächenablagerungen) maßgeblich verringert.

Gemäß einem Ausführungsbeispiel können der gehärtete erste Oberflächenabschnitt und der thermisch hochleitfähige zweite Oberflächenabschnitt des Kolbens als gemeinsame (insbesondere identische, mithin einstoffige) Beschichtung ausgebildet sein. Insbesondere können der erste Oberflächenabschnitt des Kolbens und der zweite Oberflächenabschnitt des Kolbens direkt ineinander übergehen oder sogar teilidentisch oder vollidentisch sein. Den gesamten Kolben oder einen begrenzten Oberflächenbereich desselben mit ein und derselben thermisch hochleitfähigen Härtungsbeschichtung zu versehen, ist herstellungstechnisch einfach und funktionell hocheffektiv. Ein wirksamer Kratzschutz kann dadurch mit einer effizienten Vermeidung der Verschmutzung durch aufschmelzendes Dichtungsmaterial kombiniert werden.

Der erste Oberflächenabschnitt des Kolbens und der zweite Oberflächenabschnitt des Kolbens können vollständig unterschiedliche Oberflächenabschnitte des Kolbens sein, können vollständig identische Oberflächenabschnitte des Kolbens sein, oder können teilweise unterschiedliche und teilweise identische Oberflächenabschnitte des Kolbens sein.

Gemäß einem Ausführungsbeispiel können der gehärtete erste Oberflächenabschnitt und der thermisch hochleitfähige zweite Oberflächenabschnitt des Stützkörpers als gemeinsame (insbesondere identische, mithin einstoffige) Beschichtung ausgebildet sein. Insbesondere können der erste Oberflächenabschnitt des Stützkörpers und der zweite Oberflächenabschnitt des Stützkörpers direkt ineinander übergehen oder sogar teilidentisch oder vollidentisch sein. Den gesamten Stützkörper oder einen begrenzten Oberflächenbereich mit ein und derselben thermisch hochleitfähigen Härtungsbeschichtung zu versehen, ist herstellungstechnisch einfach. Ein Kratzschutz kann dadurch mit einer Vermeidung der Verschmutzung durch aufschmelzendes Dichtungsmaterial kombiniert werden.

Der erste Oberflächenabschnitt des Stützkörpers und der zweite Oberflächenabschnitt des Stützkörpers können vollständig unterschiedliche Oberflächenabschnitte des Stützkörpers sein, können vollständig identische Oberflächenabschnitte des Stützkörpers sein, oder können teilweise unterschiedliche und teilweise identische Oberflächenabschnitte des Stützkörpers sein.

Gemäß einem Ausführungsbeispiel kann die Dichtung als den Kolben ringförmig umgebende Dichtung mit einem an dem Stützkörper angrenzenden ringförmigen Dichtflansch und einen an den Kolben und die Pumpenkörpereinrichtung angrenzenden ringförmigen Lippenbereich ausgebildet sein. Der Dichtflansch kann an eine Seite eines massiven und zentralen Dichtschafts angeformt sein, an dessen anderer Seite der ringförmige Lippenbereich (der eine innere Dichtlippe und eine äußere Dichtlippe umfassen kann) angeformt sein kann. Der Dichtflansch dient als Schnittstelle zum Stützkörper und kann an diesen angepresst sein und positioniert die Dichtung axial. Der Dichtschaft verleiht der Dichtung eine ausreichende Stabilität. Der Lippenbereich, der aus demselben Material wie der Dichtschaft und der Dichtflansch gebildet sein kann, kann wesentlich dünner und daher wesentlich flexibler bzw. elastischer ausgebildet werden als der Dichtschaft, um sich dichtend an die Pumpenkörpereinrichtung bzw. den Kolben anzuschmiegen. Der Lippenbereich bildet einen hydraulischen Hohlraum aus bzw. begrenzt diesen, in dem aus dem Differenzdruck des Fluidförderraums zur Umgebung eine Radialkraft auf die äußere Dichtlippe und die innere Dichtlippe des Lippenbereichs entstehen kann. Damit wird der Lippenbereich bei höheren Drücken hydraulisch selbstdichtend.

Gemäß einem Ausführungsbeispiel kann die Fluidpumpe ein elastisches Bauelement (insbesondere eine Feder, weiter insbesondere eine Spiralfeder) aufweisen, wobei das elastische Bauelement zumindest teilweise indem hydraulischen Hohlraum zwischen der äußeren Dichtlippe und der inneren Dichtlippe angeordnet ist. Eine solche Dichtungs-Elastikbauelement-Anordnung kann bei geringen Drücken mit noch nicht ausgeprägter hydraulischer Dichtwirkung die Dichtwirkung durch das elastische Bauelement bewerkstelligen.

Gemäß einem Ausführungsbeispiel kann der Stützkörper als den Kolben ringförmig umgebender Stützring ausgebildet sein. Ein solcher Stützring kann rigide ausgebildet und zum Beispiel zumindest teilweise aus Kunststoff, Metall oder Keramik hergestellt werden. Ein metallischer, keramischer oder polymerer Basiskörper des Stützkörpers kann allerdings an seiner Oberfläche mit der oben angesprochenen thermisch hochleitfähigen Härtungsbeschichtung bedeckt sein.

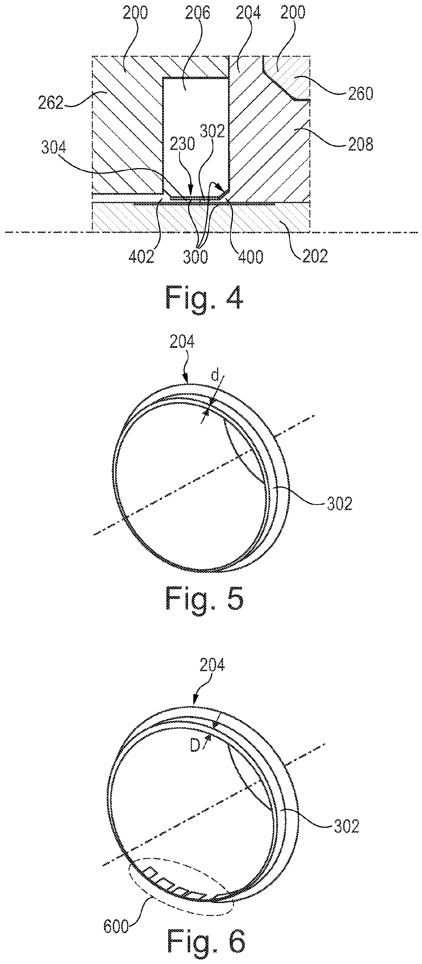

Gemäß einem Ausführungsbeispiel können der Stützkörper und der Kolben radial so eng aneinander angeordnet sein, dass diese einen maximalen Abstand in einem Bereich zwischen 10 µm und 200 µm, insbesondere in einem Bereich zwischen 10 µm und 50 µm, vorzugsweise zwischen 5 µm und unter 20 µm haben. Ein zum Beispiel als Ring ausgebildeter Stützkörper und ein zum Beispiel kreiszylindrischer Kolben können während des Betriebs zumindest vorübergehend leicht exzentrisch zueinander angeordnet sein, so dass in einem ersten Umfangsbereich eine direkte Kontaktierung zwischen Stützkörper und Kolben stattfindet, wohingegen in einem anderen Umfangsbereich eine Beabstandung zwischen Stützkörper und Kolben verbleibt (siehe zum Beispiel Figur 6). Diese kann gemäß dem beschriebenen Ausführungsbeispiel an einer Stelle maximalen Abstands insbesondere in dem geringen Bereich zwischen 5 µm und 50 µm liegen, womit sichergestellt ist, dass nur eine äußerst dünne Dichthaut in den Bereich zwischen Stützkörper und Kolben extrudieren kann. Dies reduziert den Verschleiß sowohl der dadurch weniger zu Extrusion neigenden Dichtung als auch des weniger mit Spots von geschmolzenem und wieder auf der Kolbenoberfläche verfestigtem Dichtungsmaterial belegten Kolbens.

Gemäß einem Ausführungsbeispiel kann die Pumpenkörpereinrichtung ein erstes Gehäuseteil (das einen Pumpenkopf bilden kann) mit einem Fluidförderraum in Fluidverbindung mit einem Fluideinlass und einem Fluidauslass sowie ein zweites Gehäuseteil (das auch als Pumpenkappe bezeichnet werden kann) zum Aufnehmen des Stützkörpers aufweisen. Das erste Gehäuseteil und das zweite Gehäuseteil können mit dazwischen angeordneter Dichtung druck- und fluidfest miteinander verbindbar ausgebildet sein, zum Beispiel mittels einer Schraub-, einer Bajonett-, einer Steck- oder einer Schweißverbindung.

Gemäß einem Ausführungsbeispiel kann die Dichtung ein Polymer wie Polyethylen, insbesondere Polyethylen mit ultrahohem Molekulargewicht, aufweisen oder daraus bestehen. Derartiges hochmolekulares Polyethylenmaterial hat sehr lange Polymerketten, was zu einer dauerhaft hohen Zähigkeit führt. Auch erfüllt dieses Material die Anforderungen an chemische Beständigkeit, die bei einer Fluidpumpe für Chromatographie-Anwendungen aufgrund der dort zu pumpenden Lösungsmittel bzw. Lösungsmittelzusammensetzungen unerlässlich ist. Ferner sind die genannten Materialien ausreichend temperaturstabil, um bis zu 90°C und darüber hinaus eingesetzt werden zu können. Ein solches Material hat die Fähigkeit, sich dichtend in kleine Spalten hineinbewegen zu können und selbst hohen Drücken von 1200 bar und mehr zerstörungsfrei standzuhalten. Als geeignete Materialien können zum Beispiel UHMWPE Produkte von PSI mit dem Produktcode Duron 14, oder die Dichtungswerkstoffe von Saint-Gobain mit dem Produktcode A09 verwendet werden.

Gemäß einem Ausführungsbeispiel kann der Stützkörper einen Hartkunststoff, insbesondere Polyaryletherketon (PAEK), weiter insbesondere zumindest ein Material aus der Gruppe bestehend aus Polyetheretherketon (PEEK), Polyetherketon (PEK), Polyetherketonketon (PEKK) und Polyetherketonetherketonketon (PEKEKK), aufweisen. Auch Polyimid-Komposite mit guten mechanischen und chemischen Eigenschaften können verwendet werden. Auch eine Keramik und/oder ein Metall und/oder ein Hartmetall kann oder können als Basismaterial des Stützkörpers dienen. Der Stützkörper kann somit eine viel höhere Rigidität aufweisen als die elastische Dichtung. Die Verwendung einer Keramik bzw. eines Metalls, insbesondere eines Hartmetalls, als Basismaterial für den Stützkörper ist besonders dann vorteilhaft, wenn der Stützkörper als Lager ausgestaltet wird bzw. wenn sich Stützkörper und Kolben zumindest zeitweise berühren.

Gemäß einem Ausführungsbeispiel kann der Kolben zumindest ein Material aus der Gruppe bestehend aus Zirkoniumoxid, Saphir, Hartmetall und Siliziumcarbid aufweisen. Das Kolbenmaterial kann also zum Beispiel Zirkoniumoxid (thermische Leitfähigkeit 2.5 W/mK bis 3 W/mK), Saphir (thermische Leitfähigkeit ungefähr 35 W/mK), Hartmetall (mit unterschiedlicher thermischer Leitfähigkeit) oder gesintertes Siliziumcarbid (thermische Leitfähigkeit 120 W/mK bis 160 W/mK) sein. Besonders das letztgenannte Kolbenmaterial mit der höchsten thermischen Leitfähigkeit adressiert das Wärmeverteilungverhalten des Kolbens besonders gut und ist für den Wärmeverteilungsspalt gemäß einem Ausführungsbeispiel der Erfindung mit Vorteil einsetzbar. Die genannten Materialien erfüllen die hohen mechanischen Robustheitsanforderungen einer Hochdruckpumpe und haben zudem eine hohe thermische Leitfähigkeit, mit der auch im Hochdruckbetrieb anfallende hohe Wärmemengen effizient abtransportiert werden können.

Gemäß einem Ausführungsbeispiel kann der Stützkörper und/oder der Kolben eine Beschichtung aus polykristallinem Diamant, insbesondere aus geglättetem polykristallinem Diamant, aufweisen. Das polykristalline Diamantmaterial kann zum Beispiel mit einer Dicke in einem Bereich zwischen 5 µm und 20 µm aufgebracht werden. Eine solche Diamantbeschichtung kann als Mehrschichtdiamant ausgebildet sein. Gemäß diesem bevorzugten Ausführungsbeispiel kann das härteste verfügbare Material, nämlich polykristalliner Diamant, verwendet werden, um die Bildung von Kratzern an Stützkörper und Kolben zu verunmöglichen. Durch Glätten des polykristallinen Diamantmaterial kann ein gegenseitiges Polieren der sich berührenden Diamantflächen während des Betriebs und der damit verbundene Abrieb verhindert werden. Außerdem wird dadurch der Reibkoeffizient zwischen den miteinander in Kontakt befindlichen Berührflächen von Stützkörper und Kolben extrem verbessert.

Wenn der Stützkörper und/oder der Kolben mit einer Beschichtung aus polykristallinem Diamant versehen wird oder werden, kann die Beschichtung mit Vorteil ablativ (d.h. mittels Ablation) geglättet werden. Zum Beispiel kann eine Glättung durch Laserbearbeitung, insbesondere mittels eines Femto- bis Pikosekunden Lasers, erreicht werden. Dies führt zu sehr guten tribologischen Eigenschaften zwischen Stützkörper und Kolben und daher zu einem äußerst geringen Abrieb und somit zu einer besonders hohen Lebensdauer. Die Glättung kann somit mit Vorteil ablativ, insbesondere laserablativ, durchgeführt werden. Zusätzlich bietet die Laserablation die Möglichkeit, den Traganteil der Berührflächen gezielt einzustellen.

Gemäß einem Ausführungsbeispiel können mittels Laserablation Strukturen auf zumindest einem Oberflächenbereich des Stützkörpers und/oder des Kolbens eingebracht werden. Es können also auch gleichmäßige oder regelmäßige wiederkehrende oder in einer Winkelabweichung zueinanderstehende Strukturen auf den Oberflächen eingebracht werden. So kann z.B. der Traganteil am Stützring entlang der Kolbenachse und der Traganteil am Kolben schraubenlinienförmig reduziert werden. Die Strukturen zwischen den Reibpartnern können so gewählt werden, dass ein gegenseitiges Verrasten oder Verhaken, also reiberhöhend wirkend, nicht möglich wird.

Besonders vorteilhaft können der Stützkörper und der Kolben eine Beschichtung aus Diamant auf einem Hartmetallkörper aufweisen. Die mechanischen Eigenschaften wie z.B. Zähigkeit und Festigkeit des Materials dieser Komponenten sind dann besonders hoch. Hierbei ist insbesondere zu beachten, dass die miteinander in Kontakt geratenen Diamantoberflächen von Stützkörper und Kolben die gleiche Härte haben und somit ungeachtet des Kontakts keine Abrasion an diesen Oberflächen zu befürchten ist.

Solches polykristallines Diamantmaterial kann prozesstechnisch einfach durch Abscheiden aus der Gasphase (CVD Verfahren, "chemical vapour deposition") auf einem Kern von Stützkörper bzw. Kolben abgeschieden werden und neben der Laserablation auch einer nachfolgenden Glättungspolitur (zum Beispiel thermisch, abrasiv und/oder chemisch) unterzogen werden. Die Glättung von polykristallinem Diamantmaterial kann zum Beispiel abrasiv mittels Diamantpulver oder gebundenen Diamantkörnern durchgeführt werden. Alternativ kann die Glättung des polykristallinen Diamantmaterials auch thermisch (zum Beispiel durch eine nicht ablative Laserbehandlung) und/oder chemisch erfolgen.

Gemäß einem Ausführungsbeispiel kann die Fluidpumpe als Hochdruckpumpe zum Pumpen von mobiler Phase zu einer Trenneinrichtung des Probentrenngeräts zum Trennen von unterschiedlichen Fraktionen einer in der mobilen Phase befindlichen fluidischen Probe ausgebildet sein. Unter Hochdruckbedingungen entfaltet eine Pumpe gemäß einem exemplarischen Ausführungsbeispiel besondere Vorteile hinsichtlich Verschleißschutz.

Gemäß einem Ausführungsbeispiel kann die Trenneinrichtung als chromatographische Trenneinrichtung, insbesondere als Chromatographietrennsäule, ausgebildet sein. Bei einer chromatographischen Trennung kann die Chromatographietrennsäule mit einem Adsorptionsmedium versehen sein. An diesem kann die fluidische Probe aufgehalten werden und erst nachfolgend bei Anwesenheit einer spezifischen Lösungsmittelzusammensetzung fraktionsweise wieder abgelöst werden, womit die Trennung der Probe in ihre Fraktionen bewerkstelligt wird.

Das Probenseparationsgerät kann ein mikrofluidisches Messgerät, ein Life Science-Gerät, ein Flüssigchromatographiegerät, eine HPLC (High Performance Liquid Chromatography), eine UHPLC-Anlage, ein SFC-(superkritische Flüssigchromatographie) Gerät, ein Gaschromatographiegerät, ein Elektrophoresegerät und/oder ein Gelelektrophoresegerät sein. Allerdings sind viele andere Anwendungen möglich.

Die Fluidpumpe kann zum Beispiel dazu eingerichtet sein, die mobile Phase mit einem hohen Druck, zum Beispiel einige 100 bar bis hin zu 1000 bar und mehr, durch das System hindurch zu befördern.

Das Probentrenngerät kann einen Probeninjektor zum Einbringen der Probe in den fluidischen Trennpfad aufweisen. Ein solcher Probeninjektor kann eine mit einem Sitz koppelbare Injektionsnadel in einem entsprechenden Flüssigkeitspfad aufweisen, wobei die Nadel aus diesem Sitz herausgefahren werden kann, um Probe aufzunehmen, wobei nach dem Wiedereinführen der Nadel in den Sitz die Probe sich in einem Fluidpfad befindet, der, zum Beispiel durch das Schalten eines Ventils, in den Trennpfad des Systems hineingeschaltet werden kann, was zum Einbringen der Probe in den fluidischen Trennpfad führt.

Das Probentrenngerät kann einen Fraktionssammler zum Sammeln der getrennten Komponenten aufweisen. Ein solcher Fraktionssammler kann die verschiedenen Komponenten zum Beispiel in verschiedene Flüssigkeitsbehälter führen. Die analysierte Probe kann aber auch einem Abflussbehälter zugeführt werden.

Vorzugsweise kann das Probentrenngerät einen Detektor zur Detektion der getrennten Komponenten aufweisen. Ein solcher Detektor kann ein Signal erzeugen, welches beobachtet und/oder aufgezeichnet werden kann, und welches für die Anwesenheit und Menge der Probenkomponenten in dem durch das System fließenden Fluid indikativ ist.

### KURZE BESCHREIBUNG DER FIGUREN

Andere Ziele und viele der begleitenden Vorteile von Ausführungsbeispielen der vorliegenden Erfindung werden leicht wahrnehmbar werden und besser verständlich werden unter Bezugnahme auf die folgende detailliertere Beschreibung von Ausführungsbeispielen in Zusammenhang mit den beigefügten Zeichnungen. Merkmale, die im Wesentlichen oder funktionell gleich oder ähnlich sind, werden mit denselben Bezugszeichen versehen.
Figur 1 zeigt ein HPLC-System gemäß einem exemplarischen Ausführungsbeispiel der Erfindung.
Figur 2 zeigt eine Querschnittsansicht eines inneren Pumpengehäuseseines Probentrenngeräts gemäß einem exemplarischen Ausführungsbeispiel der Erfindung.
Figur 3 zeigt eine Schnittansicht eines ringförmigen Stützkörpers der Fluidpumpe gemäß Figur 2.
Figur 4 bis Figur 6 zeigen Details der Fluidpumpe gemäß Figur 2.

Die Darstellung in den Zeichnungen ist schematisch.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem exemplarischen Ausführungsbeispiel der Erfindung sind bei einer Pumpendichtung einer Fluidpumpe einander gegenüberliegende Oberflächen eines Kolbens und eines zum Beispiel als Lager ausgebildeten Stützkörpers hochwärmeleitend und kratzfest (was zum Beispiel simultan durch eine Diamantbeschichtung erreicht werden kann). Dadurch ist es möglich, einen Spalt zwischen dem Kolben und einem diesen umfänglich umgebenden Stützring so eng wie möglich zu halten und abschnittsweise sogar eine Berührung zwischen Kolben und Stützring bzw. Lager vorzugeben. Selbst bei einem zumindest zeitweisen Kontakt zwischen Kolben und Stützkörper ist infolge der Diamantschicht keine unerwünschte Kratzerbildung zu befürchten. Ferner ist auch bei geringer Spaltdimension eine durch Wärmeleitung bewerkstelligte Wärmeabfuhr von in den engen Spalt hinein extrudiertem bzw. darin hineingedrängten Dichtungsmaterial gewährleistet, wodurch wiederum ein Aufschmelzen oder weiteres Erweichen des Dichtungsmaterials und in der Folge ein weiteres unerwünschtes Extrudieren des Dichtungsmaterials gehemmt werden kann. Anschaulich ist gemäß einem exemplarischen Ausführungsbeispiel also ein wärmeverteilender Engspalt für eine Pumpendichtung einer HPLC mit gleichzeitigem Abriebschutz bereitgestellt.

Viele HPLC Pumpen, die für kontinuierlichen Flüssigkeitstransport ausgebildet sind, folgen dem Prinzip einer longitudinalen bidirektionalen Kolbenbewegung im Inneren einer mit Ventilen verbundenen Pumpenkörpereinrichtung. Wenn ein Einlasspfad und ein Auslasspfad dieser Pumpenkörpereinrichtung mittels Schaltens der Ventile öffnen und schließen, wird ein damit einhergehender Druckanstieg entlang des Kolbens von einer Dichtung gehalten. Bis zu einem Druck von ungefähr 600 bar ist eine PTFE-basierte Dichtung einsetzbar. Bei Drücken oberhalb 600 bar, zum Beispiel 1200 bar und darüber, sind nur sehr wenige Polymerkomposite geeignet, die erforderliche chemische Inertheit und die Belastbarkeit unter höchsten Druckbedingungen zu erfüllen. Vorteilhaft können polymerische Dichtungen in einem solchen Anwendungsgebiet aus Polyethylenmaterial mit ultrahohem molekularen Gewicht und bestimmten Additiven ausgebildet werden. Um der axialen Druckbelastung standhalten zu können, können solche Polymerdichtungen zusätzlich durch einen steifen Stützring an der Rückseite der Dichtung gestützt werden, um ein Eindringen von Material der Dichtung in Richtung des Druckabfalls zu hemmen. Nur ein geringer Spalt nahe der Kolbenoberfläche verbleibt, wenn der innere Durchmesser dieses Stützrings ausgestaltet ist, um sich so nah wie möglich der Oberfläche des Kolbens anzupassen, aber auch in ausreichendem Abstand, um einen direkten Kontakt zu der Kolbenoberfläche zu verhindern, während der Kolben sich bewegt. Der Stützring muss herkömmlich von der Kolbenoberfläche zuverlässig ferngehalten werden, um Abscheidungen oder Kratzer an der Kolbenoberfläche zu vermeiden. Der hülsenförmige Spalt zwischen dem Stützring und der Kolbenoberfläche definiert herkömmlich im Wesentlichen konzentrische dünne Wände, wobei Dichtungsmaterial zumindest teilweise unter Systemdruck und Kolbenbewegung in den Spalt hineinextrudiert.

Im Gegensatz zu herkömmlichen Ansätzen vermeiden exemplarische Ausführungsbeispiele der Erfindung unerwünschte Abscheidungen oder Kratzer an der Kolbenoberfläche. Ferner ist es mit exemplarischen Ausführungsbeispielen der Erfindung möglich, wesentlich weniger Dichtungsmaterial aufgrund von druckinduzierter Extrusion von Dichtungsmaterial hinein in den Spalt zwischen dem Stützring einerseits und der Kolbenoberfläche andererseits zu verlieren. Ein unerwünschtes Aufschmelzen von Dichtmaterial und ein nachfolgendes Ablagern desselben auf die Kolbenoberfläche kann durch exemplarische Ausführungsbeispiele der Erfindung stark reduziert werden (zum Beispiel mindestens um einen Faktor von zehn) oder ganz vermieden werden. Auf diese Weise kann gemäß exemplarischen Ausführungsbeispielen der Erfindung für HPLC Pumpen, die vorteilhaft mit einer Dichtung aus Polyethylen mit ultrahohem molekularen Gewicht oder dergleichen versehen sind, die Grenze des möglichen Systemdrucks, die maximal erreichbare Kolbengeschwindigkeit und die Lebensdauer signifikant erhöht werden.

Dies kann gemäß einem exemplarischen Ausführungsbeispiel mit einer herausragenden Leistungsfähigkeit durch die Kombination eines spezifischen Designs und eines spezifischen Wärmeverteilungsmaterials an einer Kontaktoberfläche für die Dichtung realisiert werden.

Zunächst wird das spezifische Design beschrieben. Wie oben erläutert, stützt bei einer herkömmlichen Ausgestaltung der Stützring die Dichtung nur und darf keinerlei Kontakt oder nur zeitweise geringen Kontakt zu dem Kolben selbst haben. Ein Schaft der Dichtung dient herkömmlich als radiales Lager und hält den Stützring von der Kolbenoberfläche zu aller meist und ohne große Berührkräfte entfernt, bewirkt aber einen nachteiligen Spalt zwischen dem Dichtring und der Kolbenoberfläche. Im Unterschied hierzu kann gemäß einem exemplarischen Ausführungsbeispiel der Erfindung der Stützring als radiales Lager konfiguriert werden, welcher den Spalt zwischen dem Stützring und der Kolbenoberfläche so eng wie möglich hält und es der Kolbenoberfläche erlaubt, in permanenten oder zumindest zeitweisen physischen Kontakt mit der gegenüberliegenden Stützringoberfläche gemäß den existierenden radialen Lagerkräften zu gelangen. Hierfür ist es vorteilhaft, dass das miteinander in Kontakt geratende Material des Kolbens und des Stützrings sehr widerstandsfähig im Hinblick auf Verschleiß ist, so dass es nicht zur Ausbildung von Kratzern auf der Kolbenoberfläche kommt. Dies kann mit Vorteil mit einem reibungsarmen Verhalten im Kontaktbereich des Stützrings und der Kolbenoberfläche kombiniert werden. Beispielsweise kann eine geglättete polykristalline Diamantbeschichtung sowohl auf der Kolbenoberfläche als auch auf der gegenüberliegenden Oberfläche des Stützrings alle diese Anforderungen in hervorragender Weise erfüllen. Eine solche Beschichtung kann mit einem CVD-Beschichtungsverfahren und einem nachfolgenden Glättungsverfahren auf dem Kolben und dem Stützring ausgebildet werden. Da polykristalliner Diamantunter allen bisher bekannten Materialien die maximal erreichbare Härte besitzt , können auch keine Kratzer auf der Kolbenoberfläche erzeugt werden. Je nach Ausführung der polykristallinen Diamantschicht kann auch auf ein nachträgliches Glättungsverfahren verzichtet werden.

Im Weiteren wird das spezifische Wärmeverteilungsmaterial beschrieben. Bei einer herkömmlichen Ausgestaltung des Materials des Plastikrings an der Rückseite der Dichtung hat dieses eine mäßige thermische Leitfähigkeit von zum Beispiel nur ungefähr 1 W/mK. Im Hochdruckbetrieb anfallende Reibungswärme an der Dichtung kann daher herkömmlich nicht gut wirksam abgeführt werden. Experimentelle Befunde zeigen, dass herkömmlich aufgrund der begrenzten Betriebstemperatur für Dichtungsmaterialien und der hohen Reibungstemperatur innerhalb des nachteiligen Spalts zwischen Stützring und Kolbenoberfläche das dort hineingedrückte Dichtungsmaterial auf die Kolbenoberfläche zumindest in Form von kleinen Punkten (Dots) aufschmilzt und zu einem sehr schnellen Verschleiß der Dichtung führen kann. Diese Nachteile können mit exemplarischen Ausführungsbeispielen der Erfindung überwunden oder zumindest abgemildert werden. Ein exemplarisches Ausführungsbeispiel der Erfindung stellt einen sehr dünnen Wärmeverteilungsspalt an beiden Seiten des Dichtmaterials bereit, das aufgrund höchster Systemdrücke oberhalb 1000 bar oder dergleichen in den Spalt zwischen Stützring und Kolbenoberfläche extrudiert. Wenn beide Wände des engen hülsenförmigen Spalts aus polykristallinem Diamant mit einer Wärmeleitfähigkeit von annähernd 2000 W/mK hergestellt oder damit bedeckt sind, kann unerwünschte übermäßige Wärme von einer Polyethylendichtung mit ultrahohem Molekulargewicht oder dergleichen abgeführt werden und die Lebensdauer der Dichtung dramatisch erhöht werden, selbst wenn sehr hohe Kolbengeschwindigkeiten und sehr hohe Systemdrücke implementiert werden.

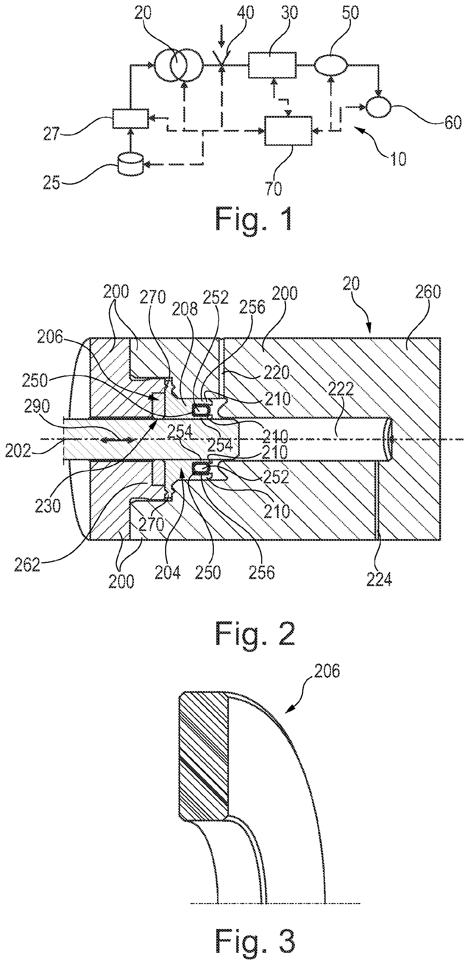

**Figur 1** zeigt den prinzipiellen Aufbau eines HPLC-Systems als Beispiel für ein Probentrenngerät 10, wie es zum Beispiel zur Flüssigkeitschromatographie verwendet werden kann. Eine Fluidpumpe 20 als Fluidantriebseinrichtung, die mit Lösungsmitteln aus einer Versorgungseinheit 25 versorgt wird, treibt eine mobile Phase durch eine Trenneinrichtung 30 (wie zum Beispiel eine chromatographische Säule), die eine stationäre Phase beinhaltet. Ein Entgaser 27 kann die Lösungsmittel entgasen, bevor diese der Fluidpumpe 20 zugeführt werden. Eine Probenaufgabeeinheit 40 ist zwischen der Fluidpumpe 20 und der Trenneinrichtung 30 angeordnet, um eine Probenflüssigkeit in den fluidischen Trennpfad einzubringen. Die stationäre Phase der Trenneinrichtung 30 ist dazu vorgesehen, Komponenten der Probe zu separieren. Ein Detektor, siehe Flusszelle 50, detektiert separierte Komponenten der Probe, und ein Fraktionierungsgerät kann dazu vorgesehen werden, separierte Komponenten der Probe in dafür vorgesehene Behälter auszugeben. Nicht mehr benötigte Flüssigkeiten können in einen Abflussbehälter 60 ausgegeben werden.

Eine Steuereinheit 70 steuert die einzelnen Komponenten 20, 25, 27, 30, 40, 50, 60 des Probentrenngeräts 10.

**Figur 2** zeigt eine Querschnittsansicht eines inneren Pumpengehäuses einer Fluidpumpe 20 gemäß einem exemplarischen Ausführungsbeispiel der Erfindung. **Figur 3** zeigt eine Schnittansicht eines ringförmigen Stützkörpers 206 der Fluidpumpe 20 gemäß Figur 2. Figur 4 bis Figur 6 zeigen Details der Fluidpumpe 20 gemäß Figur 2: **Figur 4** zeigt in einer vergrößerten Darstellung einen Grenzbereich zwischen Kolben 202, Dichtung 204 und Stützkörper 206, und **Figur 5** und **Figur 6** zeigen weitere räumliche Ansichten der Dichtung 204 in diesem Grenzbereich in unterschiedlichen Betriebszuständen.

In Figur 2 ist der Querschnitt der Fluidpumpe 20 zum Pumpen von Fluid (insbesondere eines Lösungsmittels oder einer Lösungsmittel-zusammensetzung, zum Beispiel Wasser und Acetonitril) in einem als HPLC ausgebildeten Probentrenngerät 10 gezeigt. Die Fluidpumpe 20 weist eine Pumpenkörpereinrichtung 200 auf, die hier aus einer Mehrzahl von Gehäusekomponenten gebildet bzw. begrenzt wird. Genauer gesagt ist die Pumpenkörpereinrichtung 200 aus einem ersten Gehäuseteil 260 mit einem Fluidförderraum 222 in Fluidverbindung mit einem (zum Beispiel stromabwärts eines nicht dargestellten Fluidventils angeordneten) Fluideinlass 224 und einem (zum Beispiel stromaufwärts eines nicht dargestellten weiteren Fluidventils angeordneten) Fluidauslass 220 sowie aus einem zweiten Gehäuseteil 262 zum Aufnehmen eines Stützkörpers 206 gebildet. Alternativ können das zweite Gehäuseteil 262 und der Stützkörper 206 auch einstückig bzw. als gemeinsames Bauteil ausgebildet sein. Das erste Gehäuseteil 260 (das zum Beispiel aus Stahl oder Keramik hergestellt werden kann) und das zweite Gehäuseteil 262 (das zum Beispiel ebenfalls aus Stahl oder Keramik hergestellt werden kann) mit dazwischen angeordneter Dichtung 204 sind hochdruckfest (insbesondere mindestens hochdruckfest bis 1200 bar) und fluidfest (d.h. so, dass keine nennenswerte Leckage des gepumpten Fluids auftritt) miteinander verbunden (zum Beispiel miteinander verschraubt). Die beiden Gehäuseteile 260, 262 können mechanisch ausreichend robust ausgebildet sein, um höchsten Drücke von 1200 bar und mehr standzuhalten. Das erste Gehäuseteil 260 bildet Teil eines Pumpkopfs, wohingegen das zweite Gehäuseteil 262 eine Pumpkopfabdeckung darstellt. Das zweite Gehäuseteil 262 sorgt im an dem ersten Gehäuseteil 260 montierten Zustand für einen festen Abschluss der Fluidpumpe 20 und stellt sich anschaulich im Betrieb steif gegen den Druck. An dem Fluideinlass 224 zugeführtes Fluid wird mittels eines gemäß Figur 2 in horizontaler Richtung hin und her bewegbaren (siehe Doppelpfeil 290) Kolbens 202 in dem Arbeitsvolumen oder Fluidförderraum 222 (der auf Systemdruck von zum Beispiel 1200 bar befindlich ist) bewegt und unter Hochdruck zu dem Fluidauslass 220 gepumpt. Der Fluideinlass 224 und/oder der Fluidauslass 220 kann/können mit einem oder mehreren in der Figur nicht gezeigten Ventil(en) wirkverbunden sein. Der Kolben 202 ist somit zum Fördern von Fluid reziprozierfähig in der Pumpenkörpereinrichtung 200 angeordnet. Ein Kern des Kolbens 202 kann zum Beispiel aus thermisch gut leitfähigem Siliziumcarbid gebildet sein, das wie unten näher beschrieben wird, zumindest zum Teil funktionsbeschichtet ist.

Ferner weist die Fluidpumpe 20 die flexible oder elastische, mithin zum Bewerkstelligen einer Dichtwirkung verformbare Dichtung 204 auf, die fluiddicht in Kontakt mit der Pumpenkörpereinrichtung 200 und dem Kolben 202 und die zwischen der Pumpenkörpereinrichtung 200 und dem Kolben 202 angeordnet ist. Die Dichtung 204 ist als den Kolben 202 ringförmig umgebende Dichtung 204 mit einem an den Stützkörper 206 und das zweite Gehäuseteil 262 angrenzenden Dichtflansch 270, einem zentralen ringförmigen Dichtschaft 208, und einem an den Dichtschaft 208 angeformten ringförmigen Lippenbereich 210 ausgebildet. Der Dichtschaft 208, der als Massivteil der zähelastischen Dichtung 204 angesehen werden kann, verhält sich unter Systemdruck als zähes hydraulisches Medium, das in Ritzen fließt. Der Lippenbereich 210 mit einer inneren Dichtlippe 254 und einer äußeren Dichtlippe 256 sorgt für die Abdichtung zwischen dem Kolben 202 und dem ersten Gehäuseteil 260. Der Dichtflansch 270 liegt formschlüssig an einer ringförmigen Kontaktfläche des zweiten Gehäuseteil 262 an und hält die Dichtung 204 an Ort und Stelle. Die einstoffige Dichtung 204 ist in dem gezeigten Ausführungsbeispiel aus Polyethylen mit ultrahohem Molekulargewicht gebildet. Aufgrund ihres mechanisch nachgiebigen Materials ist die Dichtung 204 ausgebildet, im Betrieb der Fluidpumpe 20 zumindest zeitweise und zumindest teilweise in einen Spalt (siehe Grenzbereich 230) zwischen dem Stützkörper 206 und dem Kolben 202 angeordnet zu sein. Ferner ist ein elastisches Bauelement 250 in Form einer Spiralfeder in einem durch das Bauelement 250 nur teilweise ausgefüllten ringförmigen Hohlraum 252 zwischen den einander gegenüberliegenden inneren und äußeren Dichtlippen 254, 256 des Lippenbereichs 210 angeordnet. Bei niedrigen Drücken von einigen Bar bewirkt vorwiegend eine elastische Kraft des elastischen Bauelements 250 die Dichtwirkung. Bei hohen Drücken von einigen hundert Bar bewirkt dagegen vorwiegend eine hydraulische Kraft die Dichtwirkung, die von in den Hohlraum 252 gepresstem Fluid herrührt, das die beiden dichtenden inneren und äußeren Dichtlippen 254, 256 nach innen gegen den Kolben 202 bzw. nach außen gegen die Pumpenkörpereinrichtung 200 drückt.

Der rigide Stützkörper 206, der in Figur 3 vergrößert dargestellt und in dem gezeigten Ausführungsbeispiel als PEEK-Ring, Keramik-Ring, Hartmetall-Ring oder Metall-Ring ausgebildet ist, ist mit der Dichtung 204 gekoppelt und stützt diese ab. Der Stützkörper 206 dient als Zwischenglied, das verhindert, dass unter dem herrschenden Druck erhitztes und deformiertes Material der Dichtung 204 durch einen Spalt zwischen dem Kolben 202 und dem zweiten Gehäuseteil 262 extrudiert. Ferner gibt der Stützkörper 206 der Dichtung 204 Halt. Der Stützkörper 206 und der Kolben 202 sind so angeordnet, dass diese im Betrieb der Fluidpumpe 20 zumindest zeitweise, insbesondere permanent, miteinander in Berührkontakt stehen. Der Stützkörper 206 ist an der Pumpenkörpereinrichtung 200, ein ortsfestes Lager für den Kolben 202 bildend, angeordnet. Zu diesem Zweck ist der ringförmige Stützkörper 206 in einer vorderseitigen ringförmigen Aussparung des zweiten Gehäuseteil 262 (auch als Kammerkappe bezeichnet) untergebracht. In dem Grenzbereich 230 zwischen Stützkörper 206 einerseits und Kolben 202 andererseits herrscht Umgebungsdruck oder zumindest annähernd Umgebungsdruck.

In der detaillierten Darstellung des inneren Pumpengehäuses gemäß Figur 4 ist gezeigt, welche Verhältnisse sich in dem Grenzbereich 230 zwischen dem Kolben 202, der Pumpenkörpereinrichtung 200, der Dichtung 204 und dem Stützkörper 206 in Anwesenheit eines hohen Systemdrucks von zum Beispiel 1200 bar einstellen. Wie mit Bezugszeichen 302 angedeutet ist, wird Material der Dichtung 204 unter Hochdruck in einen zumindest vorübergehend gebildeten Spalt zwischen dem Stützkörper 206 einerseits und dem Kolben 202 andererseits hineingedrückt bzw. im Hub des Kolbens 202 aus dem Fluidförderraum 222 heraus, zusätzlich hineingezogen. Wie mit Bezugszeichen 304 angedeutet ist, bildet sich zwischen dem Stützkörper 206 einerseits und der Dichtung 202 andererseits zumindest zeitweise ein sehr schmaler, hülsenförmiger, wärmeverteilender Spalt.

Gemäß Figur 4 ist, siehe Bezugszeichen 300, die Oberfläche des Kolbens 202 mit einer geglätteten ultraharten und thermisch hochleitfähigen Beschichtung versehen, zum Beispiel mittels CVD abgeschiedener und geglätteter polykristalliner Diamantschicht. In entsprechender Weise ist die Oberfläche des Stützkörpers 206 mit einer geglätteten ultraharten und thermisch hochleitfähigen Beschichtung versehen, zum Beispiel mittels CVD abgeschiedener und geglätteter polykristalliner Diamant. Vorzugsweise sind die beiden Beschichtungen auf dem Kolben 202 und auf dem Stützkörper 206 identisch. Dies hat Vorteile: In dem Bezugszeichen 304 entsprechenden Bereich, in dem kein Dichtungsmaterial befindlich ist und es zu einer direkten Berührung zwischen dem Kolben 202 und dem Stützkörper 206 kommen kann, sorgt die beidseitige, identische und ultraharte sowie geglättete Beschichtung für einen reibungsarmen Kontakt der einander gegenüberliegenden Berührflächen des Kolbens 202 und des Stützkörpers 206 und verhindert aufgrund der identisch harten Berührflächen die Bildung von Kratzern. In dem Bezugszeichen 302 entsprechenden Bereich, in dem in dem schmalen Spalt zwischen dem Kolben 202 und dem Stützkörper 206 Material der Dichtung 204 in Form eines dünnen Häutchens extrudiert ist, bewirkt die beidseitige thermisch hochleitfähige Beschichtung einen doppelseitigen Wärmeabtransport der erhitzten Dichtung 204 und verhindert, dass diese unter Hochdruckbedingungen unerwünscht erweicht oder gar verflüssigt wird. Einer Zerstörung der Dichtung 204 kann dadurch wirksam vorgebeugt werden. In einem mit Bezugszeichen 400 dargestellten Bereich herrscht annähernd Systemdruck (zum Beispiel 1200 bar), wohingegen in einem mit Bezugszeichen 402 dargestellten Bereich Umgebungsdruck (zum Beispiel 1 bar) herrscht. Aufgrund dieses Druckgradienten bzw. Druckgefälles kommt es zum Extrudieren von Dichtungsmaterial unter Ausbildung des Häutchens. Die hochwärmeleitfähige Härtungsbeschichtung auf dem Kolben 202 und dem Stützkörper 206 wirkt also synergistisch als Kratzschutz und hochwirksamer Wärmeleiter und dadurch als Wärmesenke für einen Dichtungsabschnitt, die durch einen ermöglichten verengten Spalt zwischen dem Kolben 202 und dem Stützkörper 206, zusätzlich verstärkt wird, was wiederum zusätzlich ein unerwünschtes Extrudieren und Aufschmelzen von Dichtungsmaterial hemmt. Das Ergebnis ist eine sehr verschleißarme Fluidpumpe 20.

Figur 5 zeigt ein Detail der Dichtung 204 in einer Blickrichtung von der Niederdruckseite (siehe Bezugszeichen 402 in Figur 4) her und bezieht sich auf die Situation des Vorliegens einer Lücke oder Spalte von umfänglich konstanter Dicke d, infolge derer gegenwärtig kein Kontakt zwischen dem Kolben 202 einerseits und dem Stützkörper 206 andererseits besteht. Es kommt zu konzentrisch extrudiertem Material der Dichtung 204 aufgrund eines konzentrischen Spalts zwischen dem Stützkörper 206 und der Oberfläche des Kolbens 202. Figur 5 zeigt also eine konzentrische Position.

Figur 6 zeigt in einer Blickrichtung von der Niederdruckseite her wiederum ein Detail der Dichtung 204 und bezieht sich auf die Situation, bei welcher der Kolben 202 einerseits und der Stützkörper 206 andererseits miteinander in Berührkontakt stehen. Es kommt zu exzentrisch extrudiertem Material der Dichtung 204 aufgrund eines exzentrischen Spalts zwischen dem Stützkörper 206 und der Oberfläche des Kolbens 202. In einem Bereich 600 befindet sich aufgrund eines direkten Kontakts zwischen dem Stützkörper 206 und dem Kolben 202 gar keine extrudierte Dichtungshaut, wohingegen eine maximale Dicke D der Dichtungshaut in einem umfänglich gegenüberliegenden Bereich zum Beispiel 15 µm betragen kann. In dem Bereich 600 ist die Dichtung 204 quasi durchsichtig, d.h. hier befindet sich in dem gezeigten Betriebszustand gegenwärtig annähernd kein Dichtungsmaterial.

Mit der Ausgestaltung gemäß Figur 2 bis Figur 6 ist es möglich, einen extrem kleinen Spalt (der zumindest abschnittsweise und/oder zumindest zeitweise zu Null werden kann und dann einen Berührkontakt erlauben kann) zwischen dem Kolben 202 und dem Stützkörper 206 zuzulassen. Durch diesen kleinen oder sogar verschwindenden Spalt kann ein unerwünschtes Extrudieren und nachfolgendes Aufschmelzen von Material der Dichtung 204 in diesen Spalt unterdrückt oder sogar eliminiert werden. Dies erhöht die Lebensdauer der Dichtung 204, da deren Material weniger schnell verschleißt bzw. sich von der Dichtung 204 ablöst, und erhöht die Lebensdauer des Kolbens 202, da sich weniger Material der Dichtung 204 in unerwünschter Weise auf der Oberfläche des Kolbens 202 ablagert. Der verkleinerte bzw. sogar verschwindende Spalt wirkt synergistisch mit der thermisch hochleitfähigen Härtungsbeschichtung (siehe Bezugszeichen 300) der korrespondierenden Gleit- bzw. Berührflächen des Kolbens 202 sowie des Stützkörpers 206 zusammen, da diese Härtungsbeschichtung 300 gleichzeitig ein verschleißarmes Abgleiten der Gleit- bzw. Berührflächen aufeinander als auch eine wirksame Wärmeabfuhr des dünnen, extrudierten und durch Quetschung gebildeten Dichthäutchens in einem verbleibenden engen Spalt sicherstellt. Dies ist besonders gut mit einer extrem wärmeleitfähigen und extrem harten polykristallinen Diamantschicht als Härtungsbeschichtung 300 möglich. Die Härtebeschichtung ist hier exemplarisch nur auf der minimal notwendigen Fläche gezeigt, kann aber auch die gesamte Oberfläche des Stützrings und/oder des Kolbens umfassen.

Es sollte angemerkt werden, dass der Begriff "aufweisen" nicht andere Elemente ausschließt und dass das "ein" nicht eine Mehrzahl ausschließt. Auch können Elemente, die in Zusammenhang mit unterschiedlichen Ausführungsbeispielen beschrieben sind, kombiniert werden. Es sollte auch angemerkt werden, dass Bezugszeichen in den Ansprüchen nicht als den Schutzbereich der Ansprüche beschränkend ausgelegt werden sollen.

## Patentansprüche

1. Fluidpumpe (20) zum Pumpen von Fluid in einem Probentrenngerät (10), wobei die Fluidpumpe (20) aufweist:
eine Pumpenkörpereinrichtung (200);
einen Kolben (202), der zum Fördern von Fluid reziprozierfähig in der Pumpenkörpereinrichtung (200) angeordnet ist;
eine Dichtung (204), die in Kontakt mit und fluiddichtend zwischen der Pumpenkörpereinrichtung (200) und dem Kolben (202) angeordnet ist;
einen Stützkörper (206), der mit der Dichtung (204) gekoppelt ist und diese stützt;
**dadurch gekennzeichnet, dass** der Stützkörper (206) an der Pumpenkörpereinrichtung (200) ein, insbesondere ortsfestes, Lager für den Kolben (202) bildend angeordnet ist;
wobei zumindest ein erster Oberflächenbereich des Stützkörpers (206), der im Betrieb der Fluidpumpe (20) zumindest zeitweise mit dem Kolben (202) in Berührkontakt steht, eine Beschichtung (300) aus Diamant, insbesondere aus polykristallinem Diamant, weiter insbesondere aus geglättetem polykristallinem Diamant, aufweist.

2. Fluidpumpe (20) gemäß Anspruch 1, wobei der Stützkörper (206) und der Kolben (202) so angeordnet sind, dass diese im Betrieb der Fluidpumpe (20) zumindest zeitweise, insbesondere permanent, miteinander in Berührkontakt stehen.

3. Fluidpumpe (20) gemäß Anspruch 1 oder 2, wobei die Dichtung (204) ausgebildet ist, im Betrieb der Fluidpumpe (20) zumindest zeitweise und/oder zumindest teilweise in einen Spalt zwischen dem Stützkörper (206) und dem Kolben (202) angeordnet zu sein.

4. Fluidpumpe (20) gemäß einem der Ansprüche 1 bis 3,
wobei zumindest ein erster Oberflächenbereich des Kolbens (202), der im Betrieb der Fluidpumpe (20) zumindest zeitweise mit dem Stützkörper (206) in Berührkontakt steht, gehärtet ist, insbesondere eine Härtungsbeschichtung (300) aufweist.

5. Fluidpumpe (20) gemäß Anspruch 4, wobei der gehärtete erste Oberflächenabschnitt des Stützkörpers (206) und der gehärtete erste Oberflächenabschnitt des Kolbens (202) dieselbe Härte aufweisen, insbesondere aus demselben Material gebildet sind.

6. Fluidpumpe (20) gemäß einem der Ansprüche 3 bis 5, aufweisend zumindest eines der folgenden Merkmale:
wobei zumindest ein zweiter Oberflächenbereich des Kolbens (202), der im Betrieb der Fluidpumpe (20) zumindest zeitweise mit der Dichtung (204) in Berührkontakt steht, thermisch hochleitfähig ist, insbesondere eine thermische Leitfähigkeit von mindestens 200 W/mK hat, weiter insbesondere von mindestens 1000 W/mK hat;
wobei zumindest ein zweiter Oberflächenbereich des Stützkörpers (206), der im Betrieb der Fluidpumpe (20) zumindest zeitweise mit der Dichtung (204) in Berührkontakt steht, thermisch hochleitfähig ist, insbesondere eine thermische Leitfähigkeit von mindestens 200 W/mK hat, weiter insbesondere von mindestens 1000 W/mK hat.

7. Fluidpumpe (20) gemäß Ansprüchen 4 und 6, wobei der gehärtete erste Oberflächenabschnitt des Kolbens (202) und der thermisch hochleitfähige zweite Oberflächenabschnitt des Kolbens (202) als gemeinsame Beschichtung (300) ausgebildet sind.

8. Fluidpumpe (20) gemäß Ansprüchen 4 und 6, wobei der gehärtete erste Oberflächenabschnitt des Stützkörpers (206) und der thermisch hochleitfähige zweite Oberflächenabschnitt des Stützkörpers (206) als gemeinsame Beschichtung (300) ausgebildet sind.

9. Fluidpumpe (20) gemäß einem der Ansprüche 1 bis 8, aufweisend zumindest eines der folgenden Merkmale:
wobei die Dichtung (204) als den Kolben (202) ringförmig umgebende Dichtung (204) mit einem an dem Stützkörper (206) angrenzenden ringförmigen Dichtflansch (270) und einem an den Kolben (202) und die Pumpenkörpereinrichtung (200) angrenzenden ringförmigen Lippenbereich (210) ausgebildet ist;
die Fluidpumpe (20) weist ein elastisches Bauelement (250), insbesondere eine Feder, weiter insbesondere eine Spiralfeder, auf, wobei das elastische Bauelement (250) zumindest teilweise in einem Hohlraum (252) zwischen einander gegenüberliegenden inneren und äußeren Dichtlippen (254, 256) des Lippenbereichs(210) angeordnet ist;
wobei der Stützkörper (206) als den Kolben (202) ringförmig umgebender Stützring ausgebildet ist;
wobei der Stützkörper (206) und der Kolben (202) so angeordnet sind, dass diese einen maximalen Abstand in einem Bereich zwischen 10 µm und 200 µm, insbesondere in einem Bereich zwischen 10 µm und 50 µm, weiter insbesondere in einem Bereich zwischen 5 µm und 20 µm, haben;
wobei die Pumpenkörpereinrichtung (200) ein erstes Gehäuseteil (260) mit einem Fluidförderraum (222) in Fluidverbindung mit einem Fluideinlass (224) und einem Fluidauslass (220) sowie ein zweites Gehäuseteil (262) zum Aufnehmen des Stützkörpers (206) aufweist, wobei das erste Gehäuseteil (260) und das zweite Gehäuseteil (262) mit dazwischen angeordneter Dichtung (204) druck- und fluidfest miteinander verbindbar ausgebildet sind.

10. Fluidpumpe (20) gemäß einem der Ansprüche 1 bis 9, aufweisend zumindest eines der folgenden Merkmale:
wobei die Dichtung (204) ein Polymer, insbesondere Polyethylen mit ultrahohem Molekulargewicht, aufweist oder daraus besteht;
wobei der Stützkörper (206) zumindest ein Material aus der Gruppe bestehend aus einer Keramik, einem Metall, einem Hartmetall und einem Hartkunststoff, insbesondere Polyaryletherketon, weiter insbesondere zumindest einem Material aus der Gruppe bestehend aus Polyetheretherketon, Polyetherketon, Polyetherketonketon und Polyetherketonetherketonketon, aufweist;
wobei der Kolben (202) zumindest ein Material aus der Gruppe bestehend aus Zirkoniumoxid, Saphir, Hartmetall und Siliziumcarbid aufweist;
wobei der Kolben (202) eine Beschichtung (300) aus Diamant, insbesondere aus polykristallinem Diamant, weiter insbesondere aus geglättetem polykristallinem Diamant, aufweist;
wobei der Stützkörper (206) und der Kolben (202) jeweils eine Beschichtung (300) aus Diamant aufweist, insbesondere aus polykristallinem Diamant, weiter insbesondere aus geglättetem polykristallinem Diamant;
wobei zumindest einer aus der Gruppe bestehend aus dem Stützkörper (206) und dem Kolben (202) eine Beschichtung (300) aus Diamant auf einem Hartmetallkörper aufweist.

11. Fluidpumpe (20) gemäß einem der Ansprüche 1 bis 10, aufweisend zumindest eines der folgenden Merkmale:
wobei die Fluidpumpe (20) als Hochdruckpumpe zum Pumpen von mobiler Phase als Fluid zu einer Trenneinrichtung (30) des Probentrenngeräts (10) zum Trennen von unterschiedlichen Fraktionen einer in der mobilen Phase befindlichen fluidischen Probe ausgebildet ist;
wobei das Lager ein radiales Lager ist;
wobei der Stützkörper (206) als radiales Lager konfiguriert ist, welcher einen Spalt zwischen dem Stützkörper (206) und einer Kolbenoberfläche so eng wie möglich hält und es der Kolbenoberfläche erlaubt, in permanenten oder zumindest zeitweisen physischen Kontakt mit der gegenüberliegenden Oberfläche des Stützkörpers (206) gemäß existierenden radialen Lagerkräften zu gelangen.

12. Probentrenngerät (10) zum Trennen einer in einer mobilen Phase befindlichen fluidischen Probe in Fraktionen, wobei das Probentrenngerät (10) aufweist:
eine Fluidpumpe (20) gemäß einem der Ansprüche 1 bis 11, konfiguriert zum Antreiben von Fluid in Form von zumindest einer der mobilen Phase und der fluidischen Probe durch das Probentrenngerät (10);
eine Trenneinrichtung (30) stromabwärts der Fluidpumpe (20) zum Trennen der unterschiedlichen Fraktionen der in der mobilen Phase befindlichen Probe.

13. Probentrenngerät (10) gemäß Anspruch 12, ferner aufweisend zumindest eines der folgenden Merkmale:
die Trenneinrichtung (30) ist als chromatographische Trenneinrichtung, insbesondere als Chromatographietrennsäule, ausgebildet;
das Probentrenngerät (10) ist zum Analysieren von zumindest einem physikalischen, chemischen und/oder biologischen Parameter von zumindest einer Fraktion der fluidischen Probe konfiguriert;
das Probentrenngerät (10) weist zumindest eines aus der Gruppe auf, die besteht aus einem Detektorgerät, einem Gerät zur chemischen, biologischen und/oder pharmazeutischen Analyse, einem Flüssigchromatografiegerät und einem HPLC-Gerät;
die Fluidpumpe (20) ist zum Antreiben des Fluids mit einem hohen Druck konfiguriert;
die Fluidpumpe (20) ist zum Antreiben des Fluids mit einem Druck von mindestens 100 bar, insbesondere von mindestens 700 bar, weiter insbesondere von mindestens 1200 bar konfiguriert;
das Probentrenngerät (10) ist als mikrofluidisches Gerät konfiguriert;
das Probentrenngerät (10) ist als nanofluidisches Gerät konfiguriert;
das Probentrenngerät (10) ist als präparatives Gerät konfiguriert;
das Probentrenngerät (10) weist eine Injektoreinrichtung (40) zum Einleiten der fluidischen Probe in einen fluidischen Pfad zwischen der Fluidpumpe (20) und der Trenneinrichtung (30) auf;
das Probentrenngerät (10) weist einen Detektor (50) zum Detektieren der getrennten Fraktionen auf;
das Probentrenngerät (10) weist einen Probenfraktionierer (60) zum Fraktionieren der getrennten Fraktionen auf.

14. Verfahren zum Herstellen einer Fluidpumpe (20) zum Pumpen von Fluid in einem Probentrenngerät (10), wobei das Verfahren aufweist:
reziprozierfähiges Anordnen eines Kolbens (202) zum Fördern von Fluid in einer Pumpenkörpereinrichtung (200);
Anordnen einer Dichtung (204) in Kontakt mit und fluiddichtend zwischen der Pumpenkörpereinrichtung (200) und dem Kolben (202);
Bereitstellen eines Stützkörpers (206), der mit der Dichtung (204) gekoppelt wird und diese stützt;
Anordnen des Stützkörpers (206) an der Pumpenkörpereinrichtung (200), sodass dieser ein, insbesondere ortsfestes, Lager für den Kolben (202) bildet;
wobei zumindest ein erster Oberflächenbereich des Stützkörpers (206), der im Betrieb der Fluidpumpe (20) zumindest zeitweise mit dem Kolben (202) in Berührkontakt steht, eine Beschichtung (300) aus Diamant, insbesondere aus polykristallinem Diamant, weiter insbesondere aus geglättetem polykristallinem Diamant, aufweist.

15. Verfahren gemäß Anspruch 14, ferner aufweisend zumindest eines der folgenden Merkmale:
ein Anordnen des Stützkörpers (206) und des Kolbens (202) derart, dass diese im Betrieb der Fluidpumpe (20) zumindest zeitweise, insbesondere permanent, miteinander in Berührkontakt stehen;
wobei zumindest einer aus der Gruppe bestehend aus dem Stützkörper (206) und dem Kolben (202) mit einer Beschichtung (300) aus polykristallinem Diamant versehen wird, welche Beschichtung (300) insbesondere ablativ, insbesondere durch Laserbearbeitung, weiter insbesondere mittels eines Femto- bis Picosekunden Lasers, geglättet wird;
wobei mittels Laserablation Strukturen auf zumindest einem Oberflächenbereich des Stützkörpers (206) und/oder des Kolbens (202) eingebracht werden.

## Claims

1. Fluid pump (20) for pumping fluid in a sample separation device (10), wherein the fluid pump (20) has:
a pump body device (200);
a piston (202), which is arranged for conveying fluid in a reciprocable manner in the pump body device (200);
a seal (204), which is arranged in contact with, and fluid-sealingly between, the pump body device (200) and the piston (202);
a supporting body (206), which is coupled to the seal (204) and supports the same;
**characterized in that**
the supporting body (206) is arranged at the pump body device (200), thereby forming an in particular stationary, bearing for the piston (202);
wherein at least a first surface section of the supporting body (206), which is, in operation of the fluid pump (20), at least temporarily in touching contact with the piston (202), has a coating (300) of diamond, in particular of polycrystalline diamond, further in particular of smoothed polycrystalline diamond.

2. Fluid pump (20) according to claim 1, wherein the supporting body (206) and the piston (202) are arranged such that these are, in operation of the fluid pump (20), at least temporarily, in particular permanently, in touching contact with each other.

3. Fluid pump (20) according to claim 1 or 2, wherein the seal (204) is formed to be arranged, in operation of the fluid pump (20), at least temporarily and/or at least partially, in a gap between the supporting body (206) and the piston (202).

4. Fluid pump (20) according to any one of the claims 1 to 3,
wherein at least a first surface section of the piston (202), which is, in operation of the fluid pump (20), at least temporarily in touching contact with the supporting body (206), is hardened, in particular has a hardening coating (300).

5. Fluid pump (20) according to claim 4, wherein the hardened first surface section of the supporting body (206) and the hardened first surface section of the piston (202) have the same hardness, in particular are formed from the same material.

6. Fluid pump (20) according to any one of the claims 3 to 5, comprising at least one of the following features:
wherein at least a second surface section of the piston (202), which is, in operation of the fluid pump (20), at least partially in touching contact with the seal (204), is thermally highly conductive, in particular has a thermal conductive of at least 200 W/mK, further in particular of at least 1000 W/mK;
wherein at least a second surface section of the supporting body (206), which is, in operation of the fluid pump (20), at least temporarily in touching contact with the seal (204), is thermally highly conductive, in particular has a thermal conductivity of at least 200 W/mK, further in particular of at least 1000 W/mK.

7. Fluid pump (20) according to claims 4 and 6, wherein the hardened first surface section of the piston (202) and the thermally highly conductive second surface section of the piston (202) are formed as a common coating (300).

8. Fluid pump (20) according to claims 4 and 6, wherein the hardened first surface section of the supporting body (206) and the thermally highly conductive second surface section of the supporting body (206) are formed as a common coating (300).

9. Fluid pump (20) according to any one of the claims 1 to 8, comprising at least one of the following features:
wherein the seal (204) is formed as a seal (204), which surrounds the piston (202) annularly with an annular sealing flange (270) that adjoins the supporting body (206) and with an annular lip area (210) that adjoins the piston (202) and the pump body device (200);
wherein the fluid pump (20) has an elastic assembly part (250), in particular a spring, further in particular a spiral spring, wherein the elastic assembly part (250) is arranged at least partially in a hollow space (252) between an inner and an outer sealing lip (254, 256) of the lip area (210), which sealing lips are arranged opposite to each other;
wherein the supporting body (206) is formed as a supporting ring that surrounds the piston (202) annularly;
wherein the supporting body (206) and the piston (202) are arranged such that they have a maximum distance in a range between 10 µm and 200 µm, in particular in a range between 10 µm and 50 µm, further in particular in a range between 5 µm and 20 µm;
wherein the pump body device (200) has a first housing part (260) having a fluid conveying space (222) in fluid connection with a fluid intake (224) and a fluid outlet (220) as well as a second housing part (262) for receiving the supporting body (206), wherein the first housing part (260) and the second housing part (262) are formed with a sealing (204) arranged therebetween to be connectable with each other pressure-resistently and fluid-resistently.

10. Fluid pump (20) according to any one of the claims 1 to 9, having at least one of the following features:
wherein the seal (204) has or consists of a polymer, in particular polyethylene having an ultra-high molecular weight;
wherein the supporting body (206) has a material selected from the group consisting of: a ceramic, a metal, a hard metal and a hard plastic material, in particular polyaryletherketone, further in particular at least one material from the group consisting of: polyetheretherketone, polyetherketone, polyetherketoneketone and polyetherketoneetherketoneketone;
wherein the piston (202) has at least one material selected from the group consisting of: zirconium oxide, sapphire, hard metal and silicon carbide;
wherein the piston (202) has a coating (300) made of diamond, in particular of polycrystalline diamond, further in particular of smoothed polycrystalline diamond;
wherein the supporting body (206) and the piston (202) each have a coating (300) of diamond, in particular of polycrystalline diamond, further in particular of smoothed polycrystalline diamond;
wherein at least one of the group consisting of the supporting body (206) and the piston (202) has a coating (300) of diamond on a hard metal body.

11. Fluid pump (20) according to any one of the claims 1 to 10, comprising at least one of the following features:
wherein the fluid pump (20) is formed as a high-pressure pump for pumping a mobile phase as a fluid to a separation device (30) of the sample separation device (10) for separating different fractions of a fluidic sample being in the mobile phase;
wherein the bearing is a radial bearing;
wherein the supporting body (206) is configured as a radial bearing, which holds a gap between the supporting body (206) and a piston surface as tight as possible and which enables the piston surface to get in a permanent or at least temporarily physical contact with the opposite surface of the supporting body (206) according to existing radial bearing forces.

12. Sample separation device (10) for separating in fractions a fluidic sample being in the mobile phase, wherein the sample separation device (10) has:
a fluid pump (20) according to any one of the claims 1 to 11, configured for driving fluid in the form of at least one of the mobile phase and the fluidic sample through the sample separation device (10);
a separation device (30) downstream of the fluid pump (20) for separating the different fractions of the sample being in the mobile phase.

13. Sample separation device (10) according to claim 12, further having at least one of the following features:
the separation device (30) is formed as a chromatographic separation device, in particular as a chromatographic separation column;
the sample separation device (10) is configured for analyzing at least one physical, chemical and/or biological parameter of at least one fraction of the fluidic sample;
the sample separation device (10) has at least one of the group, which consists of a detector device, a device for a chemical, biological and/or pharmaceutical analysis, a liquid chromatography device and a HPLC device;
the fluid pump (20) is configured for pumping the fluid with a high pressure;
the fluid pump (20) is configured for driving the fluid with a pressure of at least 100 bar, in particular of at least 700 bar, further in particular of at least 1200 bar;
the sample separation device (10) is configured as a micro-fluidic apparatus;
the sample separation device (10) is configured as a nano-fluidic apparatus;
the sample separation device (10) is configured as a preparative apparatus;
the sample separation device (10) has an injector device (40) for introducing the fluidic sample into a fluidic path between the fluid pump (20) and the separation device (30);
the sample separation device (10) has a detector (50) for detecting the separated fractions;
the sample separation device (10) has a sample fractioning device (60) for fractioning the separated fractions.

14. Method for manufacturing a fluid pump (20) for pumping fluid in a sample separation device (10), wherein the method has:
arranging a piston (202) in a reciprocable manner for conveying fluid in a pump body device (200);
arranging a seal (204) in contact with, and fluid-sealingly between, the pump body device (200) and the piston (202);
providing a supporting body (206), which is coupled to the seal (204) and supports the latter;
arranging the supporting body (206) at the pump body device (200), such that the supporting body forms a, in particular stationary, bearing for the piston (202) ;
wherein at least a first surface section of the supporting body (206), which is, in operation of the fluid pump (20), at least temporarily in touching contact with the piston (202), has a coating (300) of diamond, in particular of polycrystalline diamond, further in particular of smoothed polycrystalline diamond.

15. Method according to claim 14, further comprising at least one of the following features:
an arranging of the supporting body (206) and the piston (202) such that they are, in operation of the fluid pump (20), at least temporarily, in particular permanently, in a touching contact with each other;
wherein at least one of the group consisting of the supporting body (206) and the piston (202) is provided with a coating (300) of polycrystalline diamond, which coating (300) is smoothed, in particular ablatively, in particular by laser processing, further in particular by a femto- to picosecond laser;
wherein structures are applied by laser ablation on at least a surface area of the supporting body (206) and/or the piston (202).

## Revendications

1. Pompe fluidique (20) pour le pompage de fluide dans un appareil de séparation d'échantillons (10), dans laquelle la pompe fluidique (20) présente :
un dispositif de corps de pompe (200) ;
un piston (202), qui est agencé pour le refoulement de fluide de manière à effectuer un mouvement de va-et-vient dans le dispositif de corps de pompe (200) ;
un joint d'étanchéité (204), qui est agencé de manière étanche aux fluides entre le dispositif de corps de pompe (200) et le piston (202) et en contact avec ceux-ci ;
un élément de support (206), qui est couplé avec le joint d'étanchéité (204) et supporte celui-ci ;
**caractérisée en ce que**
l'élément de support (206) est agencé au niveau du dispositif de corps de pompe (200) en formant un palier, en particulier stationnaire, pour le piston (202) ;
dans laquelle au moins une première zone de surface de l'élément de support (206), qui est en contact direct avec le piston (202) au moins temporairement pendant le fonctionnement de la pompe fluidique (20), présente un revêtement (300) en diamant, en particulier en diamant polycristallin, en outre en particulier en diamant polycristallin lissé.

2. Pompe fluidique (20) selon la revendication 1, **caractérisée en ce que** l'élément de support (206) et le piston (202) sont agencés de sorte que ceux-ci sont en contact direct l'un avec l'autre au moins temporairement, en particulier en permanence, pendant le fonctionnement de la pompe fluidique (20).

3. Pompe fluidique (20) selon la revendication 1 ou 2, **caractérisée en ce que** le joint d'étanchéité (204) est réalisé pour être agencé dans un interstice entre l'élément de support (206) et le piston (202) au moins temporairement et/ou au moins partiellement pendant le fonctionnement de la pompe fluidique (20).

4. Pompe fluidique (20) selon l'une quelconque des revendications 1 à 3,
**caractérisée en ce qu'**au moins une première zone de surface du piston (202), qui est en contact direct avec l'élément de support (206) au moins temporairement pendant le fonctionnement de la pompe fluidique (20), est durcie, présente en particulier un revêtement de durcissement (300).

5. Pompe fluidique (20) selon la revendication 4, **caractérisée en ce que** la première section de surface durcie de l'élément de support (206) et la première section de surface durcie du piston (202) présentent la même dureté, sont formées en particulier du même matériau.

6. Pompe fluidique (20) selon l'une quelconque des revendications 3 à 5, présentant au moins une des caractéristiques suivantes :
**caractérisée en ce qu'**au moins une deuxième zone de surface du piston (202), qui est en contact direct avec le joint d'étanchéité (204) au moins temporairement pendant le fonctionnement de la pompe fluidique (20), a une haute conductibilité thermique, a en particulier une conductibilité thermique d'au moins 200 W/mK, en outre en particulier d'au moins 1000 W/mK ;
dans laquelle au moins une deuxième zone de surface de l'élément de support (206), qui est en contact direct avec le joint d'étanchéité (204) au moins temporairement pendant le fonctionnement de la pompe fluidique (20), a une haute conductibilité thermique, a en particulier une conductibilité thermique d'au moins 200 W/mK, en outre en particulier d'au moins 1000 W/mK.

7. Pompe fluidique (20) selon les revendications 4 et 6, **caractérisée en ce que** la première section de surface durcie du piston (202) et la deuxième section de surface à haute conductibilité thermique du piston (202) sont réalisées en tant que revêtement commun (300).

8. Pompe fluidique (20) selon les revendications 4 et 6, **caractérisée en ce que** la première section de surface durcie de l'élément de support (206) et la deuxième section de surface à haute conductibilité thermique de l'élément de support (206) sont réalisées en tant que revêtement commun (300).

9. Pompe fluidique (20) selon l'une quelconque des revendications 1 à 8, présentant au moins une des caractéristiques suivantes :
**caractérisée en ce que** le joint d'étanchéité (204) est réalisé en tant que joint d'étanchéité (204) entourant de manière annulaire le piston (202) avec une bride d'étanchéité (270) annulaire adjacente à l'élément de support (206) et une zone de lèvre (210) annulaire adjacente au piston (202) et au dispositif de corps de pompe (200) ;
la pompe fluidique (20) présente un composant élastique (250), en particulier un ressort, en outre en particulier un ressort hélicoïdal, dans laquelle le composant élastique (250) est agencé au moins en partie dans une cavité (252) entre des lèvres d'étanchéité intérieure et extérieure (254, 256) opposées l'une à l'autre de la zone de lèvre (210) ;
dans laquelle l'élément de support (206) est réalisé en tant que bague de support entourant de manière annulaire le piston (202) ;
dans laquelle l'élément de support (206) et le piston (202) sont agencés de sorte que ceux-ci ont une distance maximum dans une plage entre 10 µm et 200 µm, en particulier dans une plage entre 10 µm et 50 µm, en outre en particulier dans une plage entre 5 µm et 20 µm ;
dans laquelle le dispositif de corps de pompe (200) présente une première partie de boîtier (260) avec un espace de refoulement de fluide (222) en liaison fluidique avec une entrée de fluide (224) et une sortie de fluide (220) ainsi qu'une deuxième partie de boîtier (262) pour la réception de l'élément de support (206), dans laquelle la première partie de boîtier (260) et la deuxième partie de boîtier (262) sont réalisées de manière à pouvoir être reliées l'une à l'autre de manière étanche à la pression et aux fluides avec un joint d'étanchéité (204) agencé entre.

10. Pompe fluidique (20) selon l'une quelconque des revendications 1 à 9, présentant au moins une des caractéristiques suivantes :
**caractérisée en ce que** le joint d'étanchéité (204) présente en polymère, en particulier du polyéthylène à poids moléculaire ultra-élevé, ou en est composé ;
dans laquelle l'élément de support (206) présente au moins un matériau du groupe constitué d'une céramique, d'un métal, d'un métal dur et d'un plastique dur, en particulier polyaryléthercétone, en outre en particulier au moins un matériau du groupe constitué de polyétheréthercétone, polyéthercétone, polyéthercétonecétone et polyéthercétoneéthercétonecétone ;
dans laquelle le piston (202) présente au moins un matériau du groupe constitué d'oxyde de zirconium, de saphir, de métal dur et de carbure de silicium ;
dans laquelle le piston (202) présente un revêtement (300) en diamant, en particulier en diamant polycristallin, en outre en particulier en diamant polycristallin lissé ;
dans laquelle l'élément de support (206) et le piston (202) présentent respectivement un revêtement (300) en diamant, en particulier en diamant polycristallin, en outre en particulier en diamant polycristallin lissé ;
dans laquelle au moins un du groupe constitué de l'élément de support (206) et du piston (202) présente un revêtement (300) en diamant sur un corps en métal dur.

11. Pompe fluidique (20) selon l'une quelconque des revendications 1 à 10, présentant au moins une des caractéristiques suivantes :
**caractérisée en ce que** la pompe fluidique (20) est réalisée en tant que pompe haute pression pour le pompage de phase mobile en tant que fluide vers un dispositif de séparation (30) de l'appareil de séparation d'échantillons (10) pour la séparation de différentes fractions d'un échantillon fluidique se trouvant dans la phase mobile ;
dans laquelle le palier est un palier radial ;
dans laquelle l'élément de support (206) est configuré en tant que palier radial, lequel maintient un interstice entre l'élément de support (206) et une surface de piston aussi étroite que possible et il permet à la surface de piston d'entrer en contact physique permanent ou au moins temporaire avec la surface opposée de l'élément de support (206) conformément aux forces de palier radiales existantes.

12. Appareil de séparation d'échantillons (10) pour la séparation d'un échantillon fluidique se trouvant dans une phase mobile en fractions, **caractérisé en ce que** l'appareil de séparation d'échantillons (10) présente :
une pompe fluidique (20) selon l'une quelconque des revendications 1 à 11, configurée pour l'entraînement de fluide sous la forme d'au moins un de la phase mobile et de l'échantillon fluidique à travers l'appareil de séparation d'échantillons (10) ;
un dispositif de séparation (30) en aval de la pompe fluidique (20) pour la séparation des différentes fractions de l'échantillon se trouvant dans la phase mobile.

13. Appareil de séparation d'échantillons (10) selon la revendication 12, présentant en outre au moins une des caractéristiques suivantes :
le dispositif de séparation (30) est réalisé en tant que dispositif de séparation chromatographique, en particulier en tant que colonne de séparation chromatographique ;
l'appareil de séparation d'échantillons (10) est configuré pour l'analyse d'au moins un paramètre physique, chimique et/ou biologique d'au moins une fraction de l'échantillon fluidique ;
l'appareil de séparation d'échantillons (10) présente au moins un du groupe, qui est constitué d'un appareil de détection, d'un appareil pour l'analyse chimique, biologique et/ou pharmaceutique d'un appareil de chromatographie liquide et d'un appareil HPLC ;
la pompe fluidique (20) est configurée pour l'entraînement du fluide avec une pression élevée ;
la pompe fluidique (20) est configurée pour l'entraînement du fluide avec une pression d'au moins 100 bar, en particulier d'au moins 700 bar, en outre en particulier d'au moins 1200 bar ;
l'appareil de séparation d'échantillons (10) est configuré en tant qu'appareil microfluidique ;
l'appareil de séparation d'échantillons (10) est configuré en tant qu'appareil nanofluidique ;
l'appareil de séparation d'échantillons (10) est configuré en tant qu'appareil de préparation ;
l'appareil de séparation d'échantillons (10) présente un dispositif d'injection (40) pour l'introduction de l'échantillon fluidique dans un trajet fluidique entre la pompe fluidique (20) et le dispositif de séparation (30) ;
l'appareil de séparation d'échantillons (10) présente un détecteur (50) pour la détection des fractions séparées ;
l'appareil de séparation d'échantillons (10) présente un fractionneur d'échantillon (60) pour le fractionnement des fractions séparées.

14. Procédé de fabrication d'une pompe fluidique (20) pour le pompage de fluide dans un appareil de séparation d'échantillons (10), **caractérisé en ce que** le procédé présente :
l'agencement pouvant effectuer un mouvement de va-et-vient d'un piston (202) pour le refoulement de fluide dans un dispositif de corps de pompe (200) ;
l'agencement d'un joint d'étanchéité (204) de manière étanche aux fluides entre le dispositif de corps de pompe (200) et le piston (202) et en contact avec ceux-ci ;
la mise à disposition d'un élément de support (206), qui est couplé avec le joint d'étanchéité (204) et supporte celui-ci ;
l'agencement de l'élément de support (206) au niveau du dispositif de corps de pompe (200), de sorte que celui-ci forme un palier, en particulier stationnaire, pour le piston (202) ;
dans lequel au moins une première zone de surface de l'élément de support (206), qui est en contact direct avec le piston (202) au moins temporairement pendant le fonctionnement de la pompe fluidique (20), présente un revêtement (300) en diamant, en particulier en diamant polycristallin, en outre en particulier en diamant polycristallin lissé.

15. Procédé selon la revendication 14, présentant en outre au moins une des caractéristiques suivantes :
un agencement de l'élément de support (206) et du piston (202) de sorte que ceux-ci sont en contact direct l'un avec l'autre au moins temporairement, en particulier en permanence pendant le fonctionnement de la pompe fluidique (20) ;
**caractérisé en ce qu'**au moins un du groupe constitué de l'élément de support (206) et du piston (202) est doté d'un revêtement (300) en diamant polycristallin, lequel revêtement (300) est lissé en particulier par ablation, en particulier par traitement laser, en outre en particulier au moyen d'un laser femtoseconde à picoseconde ;
dans lequel des structures sont ménagées sur au moins une zone de surface de l'élément de support (206) et/ou du piston (202) par ablation laser.
